# EUROPÄISCHE PATENTSCHRIFT

(11) **EP 3 800 786 B1**
(45) Veröffentlichungstag und Bekanntmachung des Hinweises auf die Patenterteilung: **26.03.2025**
(21) Anmeldenummer: 19201027.0
(22) Anmeldetag: 02.10.2019
(51) Int. Cl.: H02S 40/42, H02S 30/10, H02S 20/10

(54) **SOLARBETRIEBENE BELEUCHTUNGSVORRICHTUNG**
SOLAR POWERED LIGHTING DEVICE
DISPOSITIF D'ÉCLAIRAGE SOLAIRE

(43) Veröffentlichungstag der Anmeldung: 07.04.2021
(73) Patentinhaber: ICGH Investment and Consulting GmbH, 1140 Wien (AT)
(72) Erfinder: Hornbachner, Dieter, 1170 Wien (AT); Mulalic, Ismar, 1220 Wien (AT); Kovacic, Tim, 1040 Wien (AT)
(74) Vertreter: Weiser Voith Gugler Patentanwälte Partnerschaft

(56) Entgegenhaltungen:
- EP-A2- 0 849 524
- WO-A1-2010/050993
- WO-A2-2013/093402
- DE-U1- 202016 005 734
- US-A- 4 224 082
- US-A1- 2011 305 010
- US-A1- 2013 322 063

## Beschreibung

Die vorliegende Erfindung betrifft eine solarbetriebene Beleuchtungsvorrichtung, mit einem im Wesentlichen rohrförmigen, in seiner Montagestellung vertikal liegenden Solarmodul, das über zumindest einen Akkumulator und ein Elektronikmodul eine Leuchte elektrisch speist.

Rohrförmige Photovoltaik- bzw. Solarmodule sind aus dem Europäischen Patent EP 2 071 635 B1 derselben Anmelderin bekannt und haben den Vorteil, dass Licht von allen Seiten des Solarmoduls verwertet werden kann. Dies erübrigt auch eine spezielle Ausrichtung des Solarmoduls gegenüber der Sonne bei der Montage und im Betrieb. Aufgrund seiner rohrförmigen Gestalt kann das Solarmodul koaxial auf dem Mast angeordnet werden, was besonders wenig Platz benötigt und besonders ästhetische Beleuchtungsvorrichtungen, z.B. zur Straßenbeleuchtung, ermöglicht.

Derzeit werden die Akkumulatoren und das Elektronikmodul der Beleuchtungsvorrichtung in einem Schaltkasten am Fuß des Mastes angeordnet, was eine durch den Mast verlaufende Verkabelung und die Verwendung von Spezialmasten hiefür erfordert. Wenn der Schaltkasten in einem unterirdischen Schacht neben dem Mastfuß installiert wird, sind aufwendige Grabungs- und Bauarbeiten notwendig. Der Schaltkasten muss überdies mit einer Ventilation ausgestattet sein, um die Akkumulatoren und das Elektronikmodul zu kühlen, da andernfalls Betriebsstörungen auftreten können.

Aus der WO 2010/050993 ist eine Beleuchtungsvorrichtung gemäß dem Oberbegriff des Anspruchs 1 mit einem rohrförmigen Mast und einem darauf aufgebrachten Solarmodul bekannt. Im Inneren des Masts sind in einem unteren Abschnitt Akkumulatoren und in einem oberen Abschnitt eine Solarleuchte mit einem Elektronikmodul angeordnet.

Die Erfindung setzt sich zum Ziel, eine solarbetriebene Beleuchtungsvorrichtung zu schaffen, welche kostengünstig gefertigt und rasch vor Ort aufgebaut werden kann und ein verbessertes thermisches Verhalten und damit hohe Zuverlässigkeit im Betrieb hat.

Dieses Ziel wird mit einer solarbetriebenen Beleuchtungsvorrichtung der einleitend genannten Art erreicht, bei welcher der zumindest eine Akkumulator und das Elektronikmodul im Inneren des Solarmoduls jeweils mit Radialabstand zu diesem angeordnet sind, wobei das Solarmodul an seinem oberen Ende und an seinem unteren Ende jeweils eine Ventilationsöffnung hat, wobei das Solarmodul am oberen Ende eine obere Abdeckung und am unteren Ende eine untere Abdeckung aufweist, wobei im Schnittstellenbereich zwischen jeder Abdeckung und dem Solarmodul jeweils ein Ringspalt oder Kranz von Öffnungen vorgesehen ist, welcher die jeweilige genannte Ventilationsöffnung bildet, und wobei die untere Abdeckung durch die Leuchte gebildet ist.

Auf diese Weise wird der Innenraum des rohrförmigen Solarmoduls zur Aufnahme aller elektrischen Komponenten wie Akkumulatoren und Elektronikmodule ausgenützt, sodass keinerlei weitere Verkabelung mehr erforderlich ist. Ein gesonderter Schaltkasten entfällt, ebenso wie eine Verkabelung im Mast. Dadurch können insbesondere auch standardisierte Masten ohne Kabeldurchführungen verwendet werden, was die Fertigungskosten reduziert. Durch die vertikale Anordnung des Solarmoduls und die Ventilationsöffnungen an seinen unteren und oberen Enden ergibt sich eine Konvektionskühlung der im Inneren des Solarmoduls enthaltenen Komponenten, u.zw. durch den Kamineffekt der im Solarmodul aufsteigenden, von den Komponenten erwärmten Luft. Eine zusätzliche Zwangskühlung durch Ventilatoren ist nicht erforderlich. Gleichzeitig kühlt der das Solarmodul von unten nach oben durchsetzende Luftstrom auch das Solarmodul selbst, was den Wirkungsgrad und die Lebensdauer des Solarmoduls erhöht. Im Ergebnis wird eine kostengünstige, autarke, einfach zu montierende und im Betrieb störungsunanfällige Beleuchtungsvorrichtung geschaffen.

Die Ventilationsöffnungen an den Enden des Solarmoduls können als Ringspalte oder umlaufende Kränze von Öffnungen, d.h. unterbrochene Ringspalte, realisiert werden, sei es im jeweiligen Solarmodulende oder der jeweiligen Abdeckung oder zwischen diesen. Erfindungsgemäß weist das Solarmodul am oberen Ende eine obere Abdeckung und am unteren Ende eine untere Abdeckung auf, und im Schnittstellenbereich zwischen jeder Abdeckung und dem Solarmodul ist jeweils ein Ringspalt oder Kranz von Öffnungen vorgesehen, welcher die jeweilige genannte Ventilationsöffnung bildet.

Gemäß der Erfindung ist die untere Abdeckung durch die vom Solarmodul gespeiste Leuchte selbst gebildet. Damit sind alle Komponenten Solarmodul, Akkumulator(en), Elektronikmodul und Leuchte in einer einzigen, autarken, einfach zu montierenden Einheit vereinigt. Gleichzeitig kann die Abwärme der Leuchte durch den Luftstrom, der den Ringspalt bzw. Öffnungskranz zwischen Leuchte und unterem Ende des Solarmoduls durchsetzt, gekühlt werden. Ein einziger, durch den Kamineffekt bewirkter Luftstrom, der über den unteren Ringspalt bzw. Öffnungskranz eintritt, im Ringraum zwischen Solarmodul und Akkumulatoren(en) und Elektronikmodul aufsteigt und über den oberen Ringspalt bzw. Öffnungskranz austritt, kühlt somit alle Komponenten Leuchte, Solarmodul, Akkumulator(en) und Elektronikmodul.

Die Einbeziehung der Leuchte in den gemeinsamen Kühlluftstrom hat dabei auch den Vorteil, dass der Tag/Nacht-Versatz der Wärmeentwicklung von Leuchte einerseits und Solarmodul andererseits ausgenützt werden kann. Das Solarmodul und das Elektronikmodul werden zum Laden der Akkumulatoren bei Tag betrieben, wenn die Leuchte in der Regel abgeschaltet ist, wogegen in der Nacht die Leuchte betrieben wird und Wärme erzeugt, dann aber das Solarmodul weder von der Sonneneinstrahlung aufgeheizt wird noch das Elektronikmodul bei der Ladestromsteuerung Abwärme erzeugt. Die über den gemeinsamen Kühlluftstrom durch das Solarmodulinnere hindurch transportierte Wärmemenge wird somit über Tag und Nacht verteilt und eine Wärmeüberlastung der Beleuchtungsvorrichtung dadurch verhindert.

Besonders günstig ist es, wenn dazu die Leuchte auf ihrer dem Inneren des Solarmoduls zugewandten Seite mit einem Kühlkörper versehen ist, sodass sie ihre Wärme an den aufsteigenden Kühlluftstrom besser abgeben kann.

Die erfindungsgemäße Ausführungsform der Beleuchtungsvorrichtung mit unterseitig angeordneter Leuchte kann beispielsweise von einem Gebäude, einer Montagebrücke, einem Montagegalgen usw. abgehängt werden. Besonders vorteilhaft ist es, wenn das Solarmodul an einem Ende, bevorzugt an beiden Enden, jeweils mit einem Kragarm zur Montage an einem Mast, Gebäude od.dgl. ausgestattet ist, was eine stabile Verankerung ergibt. Insbesondere bei der Montage an einem Mast kann der obere Kragarm an der Spitze des Mastes montiert werden und der untere Kragarm dient zur Abstützung am Mast, sodass das Solarmodul parallel neben dem oberen Bereich des Mastes zu liegen kommt.

In jeder der genannten Ausführungsformen können bevorzugt mehrere Akkumulatoren im Inneren des Solarmoduls übereinander gestapelt sein. Beispielsweise hat das Solarmodul eine Höhe von 1 - 4 m, typischerweise etwa 2 m, und darin können mehrere Ackumulatoren mit einer Höhe von 30 - 60 cm in Axialrichtung übereinandergestapelt aufgenommen werden.

Besonders günstig ist es, wenn das Elektronikmodul mit Abstand oberhalb der ein oder mehreren Akkumulatoren liegt. Dadurch wird eine zusätzliche thermische Trennung zwischen den Akkumulatoren und dem Elektronikmodul geschaffen.

Gemäß einem weiteren bevorzugten Merkmal der Erfindung kann jedes Solarmodul einen rohrförmigen transparenten Körper mit Photovoltaikelementen an seiner Innenseite aufweisen, wobei der Körper zwischen zwei Stirnringen gehalten ist, die über im Inneren des Solarmoduls verlaufende Stäbe miteinander verbunden sind. Die Stirnringe mit den Stäben nehmen die strukturellen Lasten der Abhängung der Solarmodule auf, sodass der transparente Körper und die Photovoltaikelemente vor übermäßigen Beanspruchungen geschützt sind. Bevorzugt sind dabei zumindest drei über den Innenumfang des Solarmoduls verteilte Stäbe vorgesehen. Dies ergibt eine käfigartige Tragstruktur im Inneren des Solarmoduls.

Dabei können in besonders vorteilhafter Weise die Stäbe über zumindest eine Tragplattform untereinander verbunden sein, auf welcher der unterste der ein oder mehreren Akkumulatoren abgestützt ist. Alternativ oder zusätzlich können die Stäbe über zumindest einen, bevorzugt zumindest zwei oder drei, weitere Ringe untereinander verbunden sein, von denen jeder bevorzugt einen der ein oder mehreren Akkumulatoren umgibt. Diese Maßnahmen ergeben eine sichere und stabile Verankerung der Ackumulatoren im Solarmodul, ohne dass die Gefahr einer Beschädigung des empfindlichen Solarmoduls durch ein anfälliges Anschlagen der Akkumulatoren bei Erschütterungen oder Schwingungen, wie sie z.B. bei hohen Windlasten auftreten können, besteht.

Die Erfindung wird nachstehend anhand von in den beigeschlossenen Zeichnungen dargestellten Ausführungsbeispielen näher erläutert. In den Zeichnungen zeigen:
die Fig. 1 und 2 eine erste Ausführungsform der Beleuchtungsvorrichtung der Erfindung in einer teilweise aufgebrochenen Perspektivansicht (Fig. 1) und einer Perspektivansicht ohne Glaskörper und Photovoltaikelemente (Fig. 2);
Fig. 3 eine zweite Ausführungsform der Beleuchtungsvorrichtung in einer teilweise aufgebrochenen Perspektivansicht; und
Fig. 4 eine Variante der ersten Ausführungsform der Fig. 1 und 2 in einer teilweise aufgebrochenen Perspektivansicht.

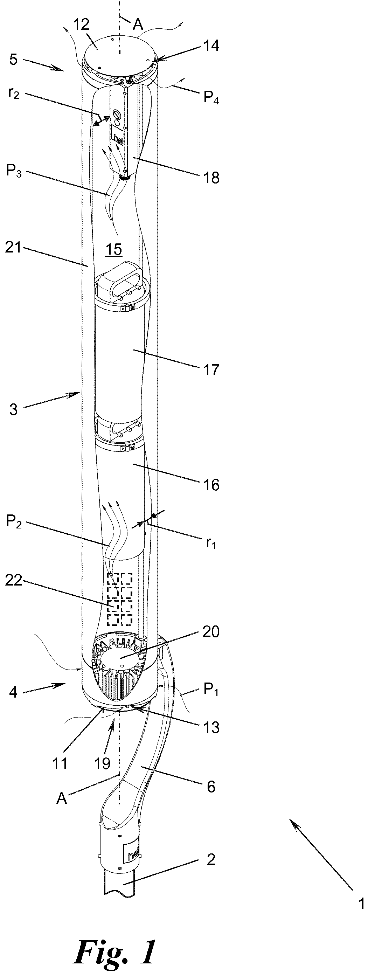

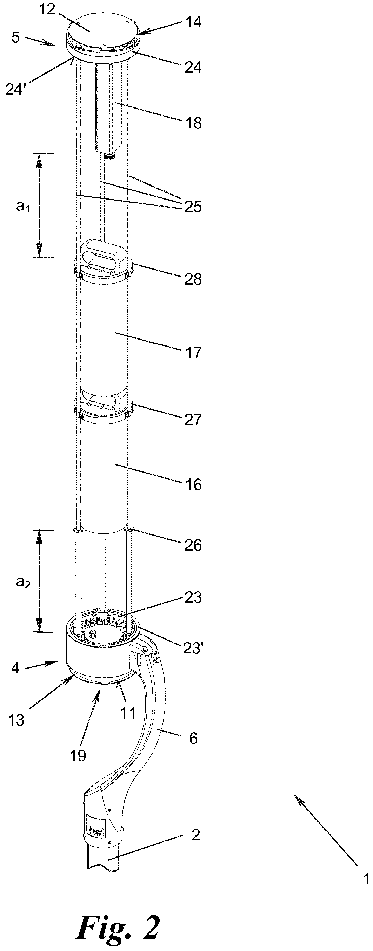

In den Fig. 1 und 2 ist eine erste Ausführungsform einer Beleuchtungsvorrichtung 1 für den öffentlichen Raum, z.B. eine Straße, gezeigt, die auf einem (nur ausschnittsweise dargestellten) Mast 2 montiert ist. Die Beleuchtungsvorrichtung 1 umfasst ein etwa rohrförmiges Solarmodul 3 mit einem unteren Ende 4 und einem oberen Ende 5. Es versteht sich, dass in der vorliegenden Beschreibung die Begriffe "oben" und "unten" sich jeweils auf die in den Fig. 1 - 4 gezeigte Montagestellung der Beleuchtungsvorrichtung 1 beziehen, in welcher die Längsachse A des rohrförmigen Solarmoduls 3 etwa vertikal liegt.

Unter dem Begriff "rohrförmig" wird in der vorliegenden Beschreibung ein Rohr mit beliebigem Querschnitt verstanden, sei es mit kreisförmigem, ovalem, rechteckigem, quadratischem, dreieckigem oder beliebig polygonalem Querschnitt.

In einer beispielhaften Ausführungsform hat der Mast 2 eine Höhe von 4 - 20 m über Grund, z.B. 8 m, und die axiale Länge eines Solarmoduls 3 beträgt 1 - 4 m, z.B. ca. 2 m.

Bei der Ausführungsform von Fig. 1 ist das Solarmodul 3 über einen von seinem unteren Ende 4 seitlich auskragenden und nach unten gekrümmtem Kragarm 6 an der Spitze des Mastes 2 montiert. Der Kragarm 6 ist wie in Fig. 1 gezeigt so gekrümmt, dass die Beleuchtungsvorrichtung 1 koaxial und mit Abstand über dem Mast 2 liegt, um ein möglichst geringes Drehmoment auf den Mast 2 auszuüben. Es versteht sich jedoch, dass die Beleuchtungsvorrichtung 1 auch auf andere Weise an einer beliebigen Tragstruktur montiert werden kann, beispielsweise mittels eines vom oberen Ende 5 des Solarmoduls 3 seitlich auskragenden Kragarms (nicht gezeigt) oder mittels eines von der Oberseite des Solarmoduls 3 nach oben ragenden Tragelements (nicht gezeigt) zur Abhängung von einem Träger, Gebäudeteil, einer Montagebrücke usw.

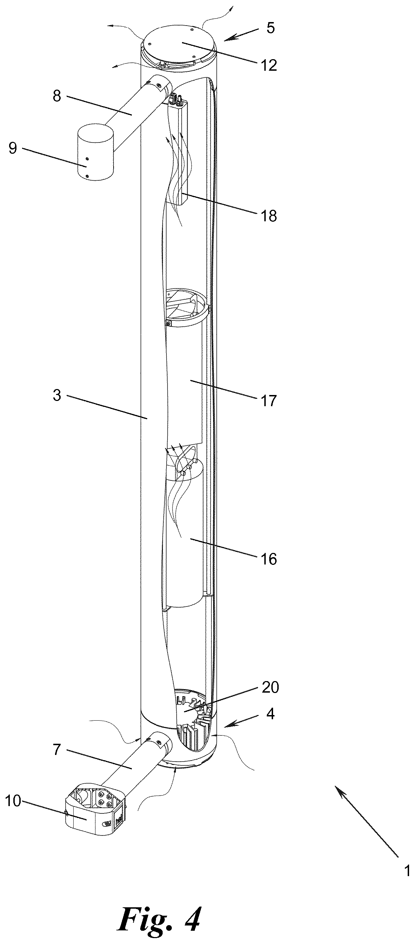

Beispielsweise zeigt Fig. 4 eine Variante der Ausführungsform von Fig. 1, in welcher sowohl das untere Ende 4 als auch das obere Ende 5 des Solarmoduls 3 jeweils mit einem seitlich auskragenden Kragarm 7, 8 ausgestattet sind. Der obere Kragarm 8 hat an seinem Ende eine Kappe 9, die auf die Spitze des Mast 2 aufgesetzt werden kann. Der untere Kragarm 7 trägt an seinem Ende eine öffen- und schließbare Manschette 10, durch welche der Mast 2 hindurchgeführt werden kann. Alternativ könnte auch der obere Kragarm 8 mit einer derartigen Manschette 10 ausgestattet sein.

Zurückkehrend auf die Fig. 1 und 2 hat das Solarmodul 3 an seinem unteren Ende 4 und an seinem oberen Ende 5 jeweils eine Abdeckung 11, 12, wobei zwischen jeder Abdeckung 11, 12 und dem Solarmodul 3 jeweils ein Ringspalt 13, 14 verbleibt. Über den unteren Ringspalt 13 kann Umgebungsluft durch Konvektion (siehe Strömungspfeile P₁) angesaugt, im Inneren 15 des rohrförmigen Solarmoduls 3 aufsteigen (Strömungspfeile P₂, P₃) und über den oberen Ringspalt 14 austreten (Strömungspfeil P₄).

Anstelle der Ringspalte 13, 14 können auch andere Arten von Ventilationsöffnungen am unteren bzw. oberen Ende 4, 5 des Solarmoduls vorgesehen werden, beispielsweise jeweils ein Kranz von umlaufenden Öffnungen. Der Ringspalt bzw. Öffnungskranz kann dabei an jedem beliebigen Ort im Schnittstellenbereich zwischen der jeweiligen Abdeckung 11, 12 und dem Solarmodul 3 vorgesehen sein, z.B. an den Enden 3, 4 des Solarmoduls 3, in den Abdeckungen 11, 12 selbst oder - wie in den Fig. 1 und 2 gezeigt - zwischen der jeweiligen Abdeckung 11, 12 und dem Solarmodul 3.

Das Innere 15 des Solarmoduls 3 nimmt alle für den Betrieb der Beleuchtungsvorrichtung 1 erforderlichen elektrischen Komponenten auf, und zwar ein oder mehrere Akkumulatoren 16, 17 und (zumindest) ein Elektronikmodul 18.

Das Solarmodul 3 speist über die Akkumulatoren 16, 17 und das Elektronikmodul 18 (zumindest) eine Leuchte 19, welche in der Ausführungsform der Fig. 1 und 2 gleichzeitig die untere Abdeckung 11 des Solarmoduls 3 bildet und insbesondere (wenn auch nicht zwingend) nach unten abstrahlt. Mit anderen Worten ist der untere Ringspalt 13 zwischen dem Außenumfang der Leuchte 19 und dem unteren Ende 4 des Solarmoduls 3 ausgebildet, und die dort einströmende Kühlluft (Strömungspfeile P₁) kühlt gleichzeitig die Leuchte 19. Die Leuchte 19 ist dazu optional auf ihrer dem Inneren 15 des Solarmoduls 3 zugewandten Seite mit einem Kühlkörper 20 versehen.

Das Solarmodul 3 hat im Detail einen rohrförmigen Körper 21 aus transparentem Material, z.B. Glas oder Kunststoff, der an seiner Innenseite mit Photovoltaikelementen 22 ausgestattet ist und diese vor Umwelteinflüssen schützt. Die Photovoltaikelemente 22 können beispielsweise in Form einer Vielzahl kleiner Plättchen sein (nur einige stellvertretend strichliert gezeigt), die untereinander verdrahtet sind und die Innenseite des Körpers 21 matrixartig auskleiden. Alternativ können die Photovoltaikelemente 22 an den Innenumfang des Körpers 21 angepasst gekrümmt sein, beispielsweise in Form eines rohrförmigen mehrlagigen Verbundelements, wie es in dem genannten Patent EP 2 071 635 B1 derselben Anmelderin beschrieben ist.

Auch ist es möglich, dass das Solarmodul 3 aus einem oder mehreren flexiblen, zu einem Rohr gewickelten bzw. zusammengefalteten Photovoltaikelement(en) gebildet ist, beispielsweise aus flexiblen Dünnschicht-Photovoltaikmodulen. In weiteren Varianten kann das Solarmodul 3 z.B. aus einzelnen in Axialrichtung des Solarmoduls verlaufenden Photovoltaikstreifen zusammengesetzt sein. Beispielsweise könnten starre, plattenförmige, längliche Photovoltaikelemente 22 direkt die Seiten eines rohrförmigen Solarmoduls 3 mit polygonalem Querschnitt bilden, z.B. mit dreieckigem, viereckigem, hexagonalem oder oktagonalem Querschnitt, u.zw. optional auch ohne schützenden transparenten Körper 21.

Im vorliegenden Beispiel ist der transparente Körper 21 mitsamt den an seiner Innenseite angebrachten Photovoltaikelementen 22 zwischen zwei Stirnringen 23, 24 gehalten, die ihrerseits über im Inneren des Solarmoduls 3 verlaufende Stäbe 25 miteinander verbunden sind. Beispielsweise sind zwei oder mehr, bevorzugt drei, über den Umfang des Solarmoduls 3 verteilte Stäbe 25 vorgesehen. Die Stäbe 25 stellen gemeinsam mit den Tragringen 23, 24 die mechanische Tragstruktur des Solarmoduls 3 dar, sodass keine Zug-, Druck- oder Querkräfte auf den Körper 21 mit den empfindlichen Photovoltaikelementen 22 ausgeübt werden, sei es durch die Abstützung des Solarmoduls 3 oder Windlasten im Betrieb. Zwischen jedem Tragring 23, 24 und dem von ihm gehaltenen transparenten Körper 21 kann jeweils eine elastische Dichtung 23', 24' vorgesehen sein, um unterschiedliche Wärmeausdehnungskoeffizienten der Stäbe 25 einerseits und des Körpers 21 bzw. der Photovoltaikelemente 22 anderseits aufzunehmen.

Wie in Fig. 2 gezeigt, sind die Stäbe 25 über eine (hier: dreiarmige) Tragplattform 26 untereinander verbunden. Auf der Tragplattform 26 ist der unterste Akkumulator 16 abgestützt. Die weiteren Akkumulatoren 17 können darüber gestapelt sein, d.h. ein oberer Akkumulator 17 liegt direkt auf einem unteren Akkumulator 16 auf, oder jeder der Akkumulatoren 16, 17 könnte auf einer eigenen Tragplattform 26 ruhen.

Zusätzlich sind die Stäbe 25 über ein oder mehrere Ringe 27, 28 untereinander verbunden, welche jeweils einen Akkumulator 16, 17 umgeben, z.B. an dessen oberem Rand. Durch die Ringe 27, 28 werden die Akkumulatoren 16, 17 innerhalb der Stäbe 25 zentriert und haben damit einen Radialabstand r₁ (Fig. 1) zur Innenseite des Solarmoduls 3. Aufgrund des Radialabstands r₁ besteht ein Ringraum zwischen der Außenseite der Akkumulatoren 16, 17 und der Innenseite des Solarmoduls 3, in welchem die über den unteren Ringspalt 13 eintretende Kühlluft durch den Kamineffekt nach oben an den Akkumulatoren 16, 17 vorbei aufsteigt (Strömungspfeile P₂), um dann über den oberen Ringspalt 14 auszutreten.

Auch das Elektronikmodul 18 hat einen Radialabstand r₂ zur Innenseite des Solarmoduls 3, sodass auch hier die Kühlluft ungehindert daran vorbeitreten kann (Strömungspfeile P₃). Zur thermischen Entkoppplung ist das Elektronikmodul 18 mit einem Axialabstand a₁ zu den übereinander gestapelten Akkumulatoren 16, 17 angeordnet, entweder wie gezeigt darüber oder alternativ darunter. Auch die Akkumulatoren 16, 17 sind zur thermischen Entkopplung mit einem Axialabstand a₂ zur Leuchte 19 angeordnet.

Die Komponenten Solarmodul 3 (genauer: dessen Photovoltaikelemente 22), Akkumulator(en) 16, 17, Elektronikmodul 18 und Leuchte 19 sind untereinander über elektrische Kabel (nicht gezeigt) verbunden, welche im Inneren 15 des Solarmoduls 3 verlaufen. Die Beleuchtungsvorrichtung 1 ist damit vollkommen autark betreibbar. Bei Tag laden die Photovoltaikelemente 22 des Solarmoduls 3 die Akkumulatoren 16, 17 über das Elektronikmodul 18, und bei Nacht (oder bei Bedarf) speisen die geladenen Akkumulatoren (16, 17) über das Elektronikmodul 18 die Leuchte 19. Die Photovoltaikelemente 22 können die Leuchte 19 selbstverständlich auch direkt (mit)speisen.

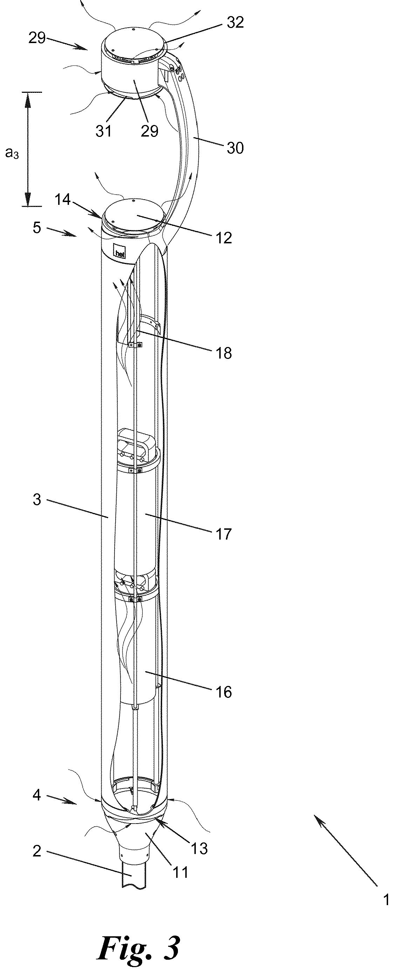

Fig. 3 zeigt eine alternative Ausführungsform der Beleuchtungsvorrichtung 1, welche sich von jener der Fig. 1, 2 und 4 nur dadurch unterscheidet, dass die Leuchte 19 hier ein gesondertes Gehäuse 29 hat, von einem am oberen Ende 5 des Solarmoduls 3 ansetzenden Arm 30 getragen ist und über dem Solarmodul 3 liegt. Die Leuchte 19 strahlt z.B. nach unten. Das Gehäuse 29 verfügt über eigene Ringspalte 31, 32 an seinem unteren und oberen Ende, um die elektrischen Komponenten der Leuchte 19 im Gehäuse 29 durch Konvektion zu kühlen.

Das Gehäuse 29 ist etwa rohrförmig und koaxial zum Solarmodul 3 über diesem mit einem Axialabstand a₃ angeordnet. Die aus dem oberen Ringspalt 14 des Solarmodul 3 austretende Kühlluft streicht nach oben und kühlt dadurch die darüber angeordnete Leuchte 19 mit.

In der Ausführungsform von Fig. 3 kann das untere Ende 4 des Solarmoduls 3, insbesondere die untere Abdeckung 11, als Halterung zur Montage auf der Spitze des Mastes 2 ausgebildet sein.

## Patentansprüche

1. Solarbetriebene Beleuchtungsvorrichtung, mit einem im Wesentlichen rohrförmigen, in seiner Montagestellung vertikal liegenden Solarmodul (3), das über zumindest einen Akkumulator (16, 17) und ein Elektronikmodul (18) eine Leuchte (19) elektrisch speist, wobei der zumindest eine Akkumulator (16, 17) und das Elektronikmodul (18) im Inneren (15) des Solarmoduls (3) jeweils mit Radialabstand (r₁, r₂) zu diesem angeordnet sind, wobei das Solarmodul (3) an seinem oberen Ende (5) und an seinem unteren Ende (4) jeweils eine Ventilationsöffnung (13, 14) hat, wobei das Solarmodul (3) am oberen Ende (5) eine obere Abdeckung (12) und am unteren Ende (4) eine untere Abdeckung (11) aufweist, und wobei im Schnittstellenbereich zwischen jeder Abdeckung (11, 12) und dem Solarmodul (3) jeweils ein Ringspalt (13, 14) oder Kranz von Öffnungen vorgesehen ist, welcher die jeweilige genannte Ventilationsöffnung bildet, **dadurch gekennzeichnet, dass** die untere Abdeckung (11) durch die Leuchte (19) gebildet ist.

2. Beleuchtungsvorrichtung nach Anspruch 1, **dadurch gekennzeichnet, dass** die Leuchte (19) auf ihrer dem Inneren (15) des Solarmoduls (3) zugewandten Seite mit einem Kühlkörper (20) versehen ist.

3. Beleuchtungsvorrichtung nach Anspruch 1 oder 2, **dadurch gekennzeichnet, dass** das Solarmodul (3) an einem Ende (4, 5), bevorzugt an beiden Enden (4, 5), jeweils mit einem Kragarm (6, 7, 8) zur Montage an einem Mast (2), Gebäude od.dgl. ausgestattet ist.

4. Beleuchtungsvorrichtung nach einem der Ansprüche 1 bis 3, **dadurch gekennzeichnet, dass** mehrere Akkumulatoren (16, 17) im Inneren (15) des Solarmoduls (3) übereinander gestapelt sind.

5. Beleuchtungsvorrichtung nach einem der Ansprüche 1 bis 4, **dadurch gekennzeichnet, dass** das Elektronikmodul (18) mit Abstand (a₁) oberhalb der ein oder mehreren Akkumulatoren (17, 18) liegt.

6. Beleuchtungsvorrichtung nach einem der Ansprüche 1 bis 5, **dadurch gekennzeichnet, dass** das Solarmodul (3) einen rohrförmigen transparenten Körper (21) mit Photovoltaikelementen (22) an seiner Innenseite aufweist, wobei der Körper (21) zwischen zwei Stirnringen (23, 24) gehalten ist, die über im Inneren (15) des Solarmoduls (3) verlaufende Stäbe (25) miteinander verbunden sind.

7. Beleuchtungsvorrichtung nach Anspruch 6, **dadurch gekennzeichnet, dass** zumindest drei über den Innenumfang des Solarmoduls (3) verteilte Stäbe (25) vorgesehen sind.

8. Beleuchtungsvorrichtung nach Anspruch 6 oder 7, **dadurch gekennzeichnet, dass** die Stäbe (25) über zumindest eine Tragplattform (20) untereinander verbunden sind, auf welcher der unterste der ein oder mehreren Akkumulatoren (16, 17) abgestützt ist.

9. Beleuchtungsvorrichtung nach einem der Ansprüche 6 bis 8, **dadurch gekennzeichnet, dass** die Stäbe (25) über zumindest einen weiteren Ring (27, 28) untereinander verbunden sind.

10. Beleuchtungsvorrichtung nach Anspruch 9, **dadurch gekennzeichnet, dass** jeder Ring (27, 28) einen der ein oder mehreren Akkumulatoren (17, 18) umgibt.

11. Beleuchtungsvorrichtung nach Anspruch 9 oder 10, **dadurch gekennzeichnet, dass** zumindest zwei, bevorzugt zumindest drei, Ringe (27, 28) über die Höhe des Solarmoduls (7, 8) verteilt sind.

## Claims

1. A solar-operated lighting device comprising a substantially tubular solar module (3), which is positioned vertically in its mounted position and electrically powers a light (19) via at least one rechargeable battery (16, 17) and an electronics module (18), the at least one rechargeable battery (16, 17) and the electronics module (18) each being arranged in the interior (15) of the solar module (3) with radial spacing (r₁, r₂) therefrom, the solar module (3) having a ventilation opening (13, 14) at both its upper end (5) and its lower end (4), the solar module (3) comprising an upper cover (12) at the upper end (5) and a lower cover (11) at the lower end (4), and an annular gap (13, 14) or a ring of openings, which respectively forms said ventilation opening, being provided in the interface region between each cover (11, 12) and the solar module (3), **characterised in that** the lower cover (11) is formed by the light (19).

2. The lighting device according to claim 1, **characterised in that** the light (19) is provided with a cooling body (20) on its side facing the interior (15) of the solar module (3).

3. The lighting device according to claim 1 or 2, **characterised in that** the solar module (3) is equipped on one end (4, 5), respectively, preferably on both ends (4, 5), with a projecting arm (6, 7, 8) for mounting on a mast (2), a building or the like.

4. The lighting device according to any of claims 1 to 3, **characterised in that** a plurality of rechargeable batteries (16, 17) are stacked on top of one another in the interior (15) of the solar module (3).

5. The lighting device according to any of claims 1 to 4, **characterised in that** the electronics module (18) is positioned above the one or more rechargeable batteries (17, 18) with spacing (a₁).

6. The lighting device according to any of claims 1 to 5, **characterised in that** the solar module (3) comprises a tubular transparent body (21) having photovoltaic elements (22) on its inner face, the body (21) being retained between two end rings (23, 24), which are interconnected by rods (25) extending in the interior (15) of the solar module (3).

7. The lighting device according to claim 6, **characterised in that** at least three rods (25) distributed over the inner circumference of the solar module (3) are provided.

8. The lighting device according to claim 6 or 7, **characterised in that** the rods (25) are connected to one another via at least one supporting platform (20), on which the lowermost of the one or more rechargeable batteries (16, 17) is supported.

9. The lighting device according to any of claims 6 to 8, **characterised in that** the rods (25) are connected to one another via at least one additional ring (27, 28).

10. The lighting device according to claim 9, **characterised in that** each ring (27, 28) surrounds one of the one or more rechargeable batteries (17, 18).

11. The lighting device according to claim 9 or 10, **characterised in that** at least two, preferably at least three, rings (27, 28) are distributed over the height of the solar module (7, 8).

## Revendications

1. Dispositif d'éclairage à commande solaire comprenant un module solaire (3) essentiellement de forme tubulaire, qui est placé verticalement dans sa position de montage et qui alimente électriquement un éclairage (19) par le biais d'au moins un accumulateur (16, 17) et d'un module électronique (18), dans lequel l'au moins un accumulateur (16, 17) et le module électronique (18) sont disposés à l'intérieur (15) du module solaire (3) avec respectivement une distance radiale (r₁, r₂) par rapport à celui-ci, dans lequel le module solaire (3) possède un orifice de ventilation (13, 14) respectivement à son extrémité supérieure (5) et à son extrémité inférieure (4), dans lequel le module solaire (3) présente à l'extrémité supérieure (5) un cache supérieur (12) et à l'extrémité inférieure (4) un cache inférieur (11), et dans lequel une fente annulaire (13, 14) ou une couronne d'orifices, formant ledit orifice de ventilation respectif, sont respectivement prévues dans la zone d'interface entre chaque cache (11, 12) et le module solaire (3), **caractérisé en ce que** le cache inférieur (11) est formé par l'éclairage (19).

2. Dispositif d'éclairage selon la revendication 1, **caractérisé en ce que** l'éclairage (19) est muni d'un corps de refroidissement (20) sur sa face orientée vers l'intérieur (15) du module solaire (3).

3. Dispositif d'éclairage selon la revendication 1 ou 2, **caractérisé en ce que** le module solaire (3) est équipé d'un bras en porte-à-faux (6, 7, 8) pour le montage à un mât (2), à un bâtiment ou similaire, respectivement à une extrémité (4, 5), de préférence, aux deux extrémités (4, 5).

4. Dispositif d'éclairage selon l'une des revendications 1 à 3, **caractérisé en ce que** plusieurs accumulateurs (16, 17) sont empilés les uns sur les autres à l'intérieur (15) du module solaire (3).

5. Dispositif d'éclairage selon l'une des revendications 1 à 4, **caractérisé en ce que** le module électronique (18) est logé à une distance (a₁) au-dessus de l'un ou des plusieurs accumulateurs (17, 18).

6. Dispositif d'éclairage selon l'une des revendications 1 à 5, **caractérisé en ce que** le module solaire (3) présente un corps (21) transparent de forme tubulaire avec des éléments photovoltaïques (22) sur sa face intérieure, où le corps (21) est maintenu entre deux bagues frontales (23, 24) qui sont reliées ensemble par le biais de barres (25) s'étendant à l'intérieur (15) du module solaire (3).

7. Dispositif d'éclairage selon la revendication 6, **caractérisé en ce qu'**au moins trois barres (25) réparties sur le périmètre intérieur du module solaire (3) sont prévues.

8. Dispositif d'éclairage selon la revendication 6 ou 7, **caractérisé en ce que** les barres (25) sont reliées entre elles par le biais d'au moins une plateforme de support (20) sur laquelle le plus bas de l'un ou des plusieurs accumulateurs (16, 17) est appuyé.

9. Dispositif d'éclairage selon l'une des revendications 6 à 8, **caractérisé en ce que** les barres (25) sont reliées entre elles par le biais d'au moins une bague supplémentaire (27, 28).

10. Dispositif d'éclairage selon la revendication 9, **caractérisé en ce que** chaque bague (27, 28) entoure un de l'un ou des plusieurs accumulateurs (17, 18).

11. Dispositif d'éclairage selon la revendication 9 ou 10, **caractérisé en ce qu'**au moins deux, de préférence au moins trois bagues (27, 28) sont réparties sur la hauteur du module solaire (7, 8).
